# EUROPEAN PATENT SPECIFICATION

(11) **EP 3 208 022 B1**
(45) Date of publication and mention of the grant of the patent: **25.08.2021**
(21) Application number: 17000243.0
(22) Date of filing: 15.02.2017
(51) Int. Cl.: B23D 59/02, B27G 19/02, B28D 7/02

(54) **PROTECTIVE COVER WITH COOLING FOR CUTTER DISCS**
SCHUTZABDECKUNG MIT KÜHLUNG FÜR MESSERSCHEIBEN
COUVERCLE DE PROTECTION AVEC DISPOSITIF DE REFROIDISSEMENT POUR DISQUES DE COUPE

(30) Priority: 17.02.2016 ES 201630180
(43) Date of publication of application: 23.08.2017
(73) Proprietor: Germans Boada, S.A., 08191 Rubi (Barcelona) (ES)
(72) Inventor: Rodriguez Rodriguez, Daniel, 08191 Rubi (Barcelona) (ES)
(74) Representative: Maldonado Jordan, Julia

(56) References cited:
- WO-A1-2009/143567
- DE-U- 1 973 874
- US-A1- 2009 277 315

## Description

### Object of the invention

The object of the invention is a protective cover with cooling for cutter discs, which may be coupled to the casing of a cutter and which comprises a generally semi-cylindrical cavity that covers a portion of the cutting disc at the top, and that is delimited by two lateral walls provided with facing extensions that make up a curved perimeter wall.

This cover has characteristics intended to enable the positioning of a tube with a nozzle in several positions to dispense the cooling liquid on the disc and to redirect the water sprayed by said disc during its rotation movement towards the cutting disc.

### Field of application of the invention

This invention is applicable in disc cutters and especially, although by no means limited to, in cutters for construction materials.

### State of the art

Currently, disc cutters that comprise a cutting disc actuated by a motor, and provided with a protective cover or lid which defines a cavity with a generally semi-cylindrical configuration intended to cover a portion of the periphery of the disc for safety reasons, leaving a portion of the disc uncovered in a cutting area, are widely known.

The incorporation of cooling means for the disc in this type of cutters is also known, consisting in a supply tube for a cooling liquid, usually water, which pours said cooling liquid on an area of the lateral surface of the disc close to its periphery.

In the known prior art of cutters, this tube is maintained in a fixed position with respect to the disc, the disc cooling varying significantly depending on the available flow rate of liquid, which could cause said cooling to become insufficient.

Another disadvantage of these cooling means is that the cooling liquid that comes into contact with the disc is rapidly sprayed against a curved perimeter wall of the cover, due to the centrifugal force created as the cutting disc rotates; the cooling liquid leaving the inner cavity of the cover practically without touching the disc and consequently creating significant waste in the cooling capacity of the liquid used.

Document US 2009277315 A1 discloses a protective cover with cooling for cutter discs comprising a generally semi-cylindrical cavity that covers a portion of the cutting disc at the top thereof. The cavity is delimited by two lateral walls and a curved perimeter wall. Fastening means are arranged internally in a periphery of the cavity for fastening a cooling liquid supply tube and a nozzle. The nozzle is positioned for dispensing a cooling liquid on the disc.

Documents DE1973874U and WO2009143567A1 disclose protective covers with cooling for cutter discs, similar to that described in cited document US 2009277315 A1, in which the lateral walls of the cover comprise internal flaps for collecting the liquid centrifuged by the disc towards the perimeter wall during rotation and for redirecting the collected liquid towards lateral faces of the disc.

### Description of the invention

The protective cover with cooling for cutter discs; comprising a generally semi-cylindrical cavity that covers a portion of the cutting disc at the top, and which is delimited by two lateral walls and a perimeter wall; it has construction peculiarities aimed at satisfactorily resolving the problem set forth, and more specifically, enabling the arrangement of the tube and the cooling liquid dispensing nozzle in different positions with respect to the cutting disc; and enabling reuse, in the cooling of the disc, of the liquid sprayed as the disc rotates, before it leaves the cavity of the cover.

To achieve said objectives, the cavity of the cover internally comprises, in its periphery, fastening means for a tube and a cooling liquid supply nozzle for the disc in at least one upper position in which the nozzle pours the liquid on the upper end of the disc, and one lower position in which the nozzle sprays the liquid directly against the edge of the disc.

The studies carried out have confirmed that the disc cools better in situations with a low flow rate if the water is sprayed from above, and in situations with a high flow rate if the water is sprayed in a horizontal position, thus the mentioned characteristic enables the disc cooling to be optimized by varying the position of the nozzle depending on the available flow, between: an upper position from which the liquid is poured on the upper area of the disc when there is a low flow rate, and a lower position when there is a higher flow rate of cooling liquid.

Another relevant characteristic of the invention is that the lateral walls of the cover internally comprise flaps for collecting, and for redirecting towards the lateral faces of the disc the liquid sprayed by the cutting disc during its rotation movement. These flaps enable the liquid sprayed by the disc against the perimeter wall of the cover to be reused to cool the disc before said liquid leaves the cavity of the cover; optimizing the use of said liquid.

The aforementioned characteristics and other characteristics of the invention described in the attached claims will be more easily understood in light of the exemplary embodiment shown by way of illustration and not limitation in the attached figures that are described below.

### Description of the figures

- Figure 1 shows a front elevation view of the protective cover with cooling for cutter discs.
- Figure 2 shows a front elevation view of the protective cover with cooling for cutter discs.
- Figure 3 shows a front elevation view of the protective cover, in which one of the lateral walls has been removed in order to allow a view of the tube and the cooling liquid supply nozzle, said nozzle being represented using solid lines in the upper position and dotted lines in a lower position.
- Figure 4 shows a perspective view of one of the lateral walls of the cover seen from its inner face.
- Figure 5 shows a profile view of a vertical cross-section of an upper portion of the cover and the disc.

### Preferred embodiment of the invention

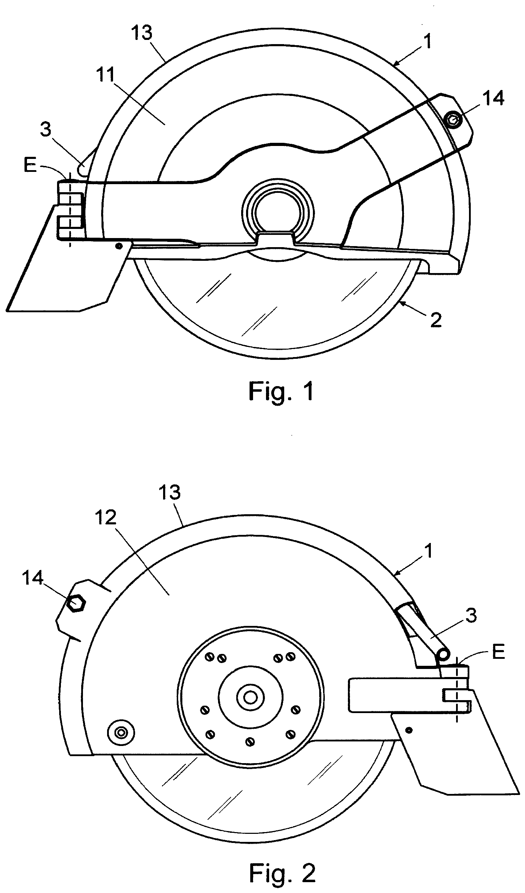

In figures 1 and 2, the protective cover (1) with cooling for cutter discs is seen; which comprises two lateral walls (11, 12) provided with facing extensions that make up a curved perimeter wall (13).

Said cover (1) covers a portion of the cutting disc (2) at the top.

The lateral walls (11, 12) are connected to each other via a rotating shaft (E) that enables the cover (1) to be opened, and they are fixed in a closed position via a threaded element (14).

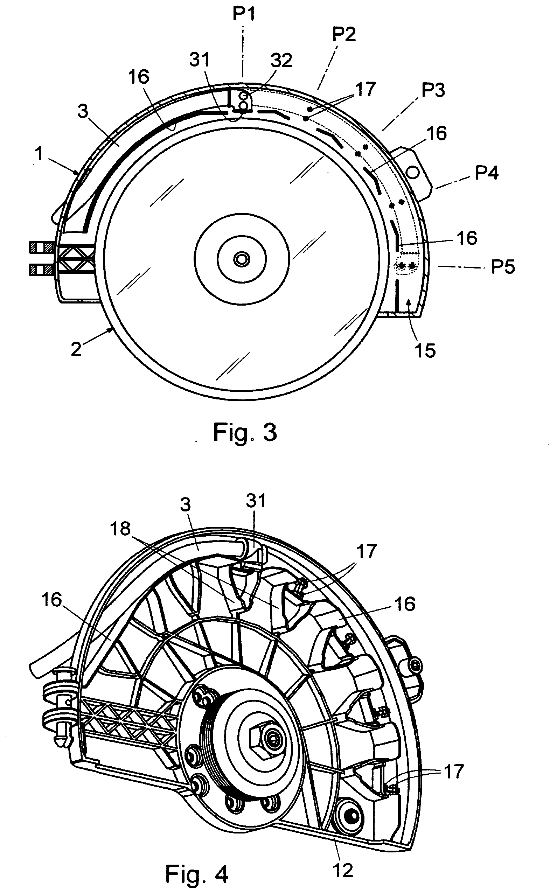

In the closed position, the cover (1) defines an inner cavity (15) that internally comprises, in its periphery, fastening means for a tube (3) and a cooling liquid supply nozzle (31) for the disc (2) in several positions (P1, P2, P3, P4, P5) shown in figure 3, comprised between: an upper position (P1) in which the nozzle pours the liquid vertically on the upper end of the disc (2), and a lower position (P5) in which the nozzle (31) sprays the liquid directly, in this case horizontally, against the edge of the disc (2).

The intermediate positions (P2, P3 and P4) are uniformly distributed between the upper and lower end positions (P1, P5).

The fastening means for the tube (3) comprise guides (16) parallel to the curved perimeter wall (13) and that define, together with said perimeter wall (13), a passage for the tube housing (3).

The fastening means for the nozzle (3) comprise attachments (17) and complementary coupling housings (32) defined inside the cover (1) and in the nozzle (31).

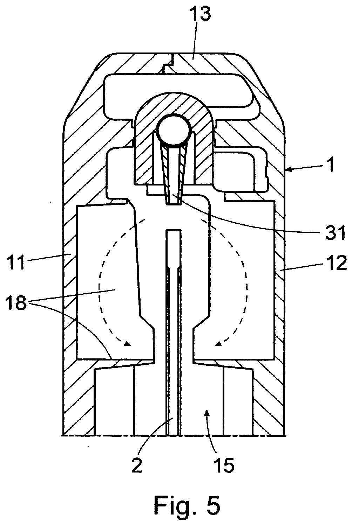

As seen in figures 4 and 5, the lateral walls (11, 12) of the cover internally comprise flaps (18) for collecting, and for redirecting towards the lateral faces of the disc (2) the liquid sprayed towards the perimeter wall (13) by the cutting disc (2) itself during its rotation movement due to the centrifugal force.

Having sufficiently described the nature of the invention, in addition to a preferred exemplary embodiment, it is hereby stated for the relevant purposes that the materials, shape, size and layout of the described elements may be modified, provided that it does not imply altering the essential characteristics of the invention claimed below. The scope of the invention is defined by the claims.

## Claims

1. A protective cover with cooling for cutter discs; which comprises a generally semi-cylindrical cavity (15) that covers a portion of the cutting disc (2) at the top and which is delimited by two lateral walls (11, 12) and a curved perimeter wall (13), wherein said cavity (15) internally comprises, in its periphery, fastening means (16, 17) for fastening a tube (3) and a cooling liquid supply nozzle (31) for dispensing a cooling liquid on the disc (2), **characterized in that**:
said fastening means for fastening the nozzle (31) comprise a plurality of attachments (17) defined inside the cover (1) and complementary coupling housings (32) defined in the nozzle (31);
said attachments (17) are distributed angularly inside the cover in several positions (P1, P2, P3, P4, P5) in order to fasten the nozzle (31) in any one of said several positions (P1, P2, P3, P4, P5); and
the several positions (P1, P2, P3, P4, P5) are comprised between an upper position (P1), in which the nozzle (31) pours the liquid on the upper end of the disc (2), and a lower position (P5), in which the nozzle (31) sprays the liquid directly against the edge of the disc (2).

2. The cover, according to claim 1, **characterized in that** the lateral walls (11, 12) of the cover (1) internally comprise flaps (18) for collecting, and for redirecting towards the lateral faces of the disc (2) the liquid sprayed by said disc (2) towards the perimeter wall (13) during its rotation movement.

3. The cover, according to any of the preceding claims, **characterized in that** the fastening means for the tube (3) comprise guides (16) parallel to the perimeter wall (13) and that define, together with said perimeter wall, a passage for the tube housing (3).

## Patentansprüche

1. Schutzabdeckung mit Kühlung für Schneidscheiben; die einen im Allgemeinen halbzylindrischen Hohlraum (15) umfasst, der oben einen Abschnitt der Schneidscheibe (2) bedeckt und der von zwei lateralen Wänden (11, 12) und einer gekrümmten Umfangswand (13) begrenzt wird, wobei der Hohlraum (15) intern in seinem Umfang Befestigungsmittel (16, 17) zum Befestigen einer Rohrleitung (3) und einer Kühlflüssigkeit-Zufuhrdüse (31) zum Abgeben einer Kühlflüssigkeit auf die Scheibe (2) umfasst, **dadurch gekennzeichnet, dass**:
das Befestigungsmittel zum Befestigen der Düse (31) eine Vielzahl von Anbringungen (17) umfasst, die in der Abdeckung (1) definiert sind und ergänzende Kopplungsgehäuse (32), die in der Düse (31) definiert sind;
wobei die Anbringungen (17) winkelförmig innerhalb der Abdeckung verteilt sind in mehreren Positionen (P1, P2, P3, P4, P5), um die Düse (31) zu befestigen in einer der mehreren Positionen (P1, P2, P3, P4, P5); und
die mehreren Positionen (P1, P2, P3, P4, P5) zwischen einer oberen Position (P1) umfasst sind, in der die Düse (31) die Flüssigkeit auf das obere Ende der Scheibe (2) gießt, und einer unteren Position (P5), in der die Düse (31) die Flüssigkeit direkt auf die Kante der Scheibe (2) sprüht.

2. Abdeckung nach Anspruch 1, **dadurch gekennzeichnet, dass** die lateralen Wände (11, 12) der Abdeckung (1) innen Klappen (18) zum Sammeln und Umleiten zu den lateralen Flächen der Scheibe (2) der Flüssigkeit umfassen, die von der Scheibe (2) in Richtung der Umfangswand (13) während der Drehbewegung gesprüht wird,

3. Abdeckung nach einem der vorhergehenden Ansprüche, **dadurch gekennzeichnet, dass** die Befestigungsmittel für die Rohrleitung (3) Führungen (16) umfassen, die parallel zu der Umfangswand (13) verlaufen und zusammen mit der Umfangswand einen Durchgang für das Rohrleitungsgehäuse (3) definieren.

## Revendications

1. Couvercle de protection avec refroidissement pour des disques de coupe ; qui comprend une cavité (15) généralement semi-cylindrique qui recouvre une partie du disque de coupe (2) au sommet et qui est délimitée par deux parois latérales (11, 12) et une paroi périmétrique incurvée (13), dans lequel ladite cavité (15) comprend intérieurement, à sa périphérie, des moyens de fixation (16, 17) pour fixer un tube (3) et une buse d'alimentation de liquide de refroidissement (31) pour dispenser un liquide de refroidissement sur le disque (2), **caractérisé en ce que** :
lesdits moyens de fixation pour fixer la buse (31) comprennent une pluralité d'attaches (17) définies à l'intérieur du couvercle (1) et des logements de couplage complémentaires (32) définis dans la buse (31) ;
lesdites attaches (17) sont distribuées angulairement à l'intérieur du couvercle dans plusieurs positions (P1, P2, P3, P4, P5) afin de fixer la buse (31) dans l'une quelconque desdites plusieurs positions (P1, P2, P3, P4, P5) ; et
les différentes positions (P1, P2, P3, P4, P5) sont comprises entre une position haute (P1), dans laquelle la buse (31) verse le liquide sur l'extrémité supérieure du disque (2), et une position inférieure (P5), dans laquelle la buse (31) pulvérise le liquide directement contre le bord du disque (2).

2. Couvercle, selon la revendication 1, **caractérisé en ce que** les parois latérales (11, 12) du couvercle (1) comprennent intérieurement des volets (18) pour recueillir, et pour rediriger vers les faces latérales du disque (2) le liquide pulvérisé par ledit disque (2) vers la paroi périmétrique (13) pendant son mouvement de rotation,

3. Couvercle, selon l'une quelconque des revendications précédentes, **caractérisé en ce que** les moyens de fixation du tube (3) comprennent des guides (16) parallèles à la paroi périmétrique (13) et qui définissent, conjointement avec ladite paroi périmétrique, un passage pour le logement du tube (3).
